(19) Europäisches Patentamt

European Patent Office

Office européen des brevets

(11) **EP 4 462 495 A1**

(12) **EUROPEAN PATENT APPLICATION**
published in accordance with Art. 153(4) EPC

(43) Date of publication:
**13.11.2024 Bulletin 2024/46**

(51) International Patent Classification (IPC):
*H01M 4/13* (2010.01)     *H01M 4/62* (2006.01)
*H01M 10/0525* (2010.01)     *H01M 4/36* (2006.01)

(21) Application number: **23822735.9**

(52) Cooperative Patent Classification (CPC):
**H01M 4/13;** H01M 4/36; H01M 4/62; H01M 10/0525;
Y02E 60/10

(22) Date of filing: **29.03.2023**

(86) International application number:
**PCT/CN2023/084613**

(87) International publication number:
**WO 2023/241164 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.06.2022   CN 202210690099
17.06.2022   CN 202221520256 U**

(71) Applicant: **Zhuhai CosMX Battery Co., Ltd.
Zhuhai, Guangdong 519180 (CN)**

(72) Inventors:
• **ZHOU, Qiao
Zhuhai, Guangdong 519180 (CN)**
• **CHEN, Sha
Zhuhai, Guangdong 519180 (CN)**
• **LI, Guoliang
Zhuhai, Guangdong 519180 (CN)**
• **XIONG, Ke
Zhuhai, Guangdong 519180 (CN)**
• **PENG, Ning
Zhuhai, Guangdong 519180 (CN)**

(74) Representative: **Bandpay & Greuter
11 rue Christophe Colomb
75008 Paris (FR)**

(54) **POLE PIECE AND BATTERY**

(57)     The present application provides an electrode piece and a battery, wherein the electrode piece provided by the present application includes a first current collector and a first functional layer arranged on at least one surface of the first current collector, the first functional layer includes active material particles, and the surface of the first functional layer is provided with a plurality of first regions and a plurality of second regions distributed alternately with the first regions; an inorganic salt layer is arranged outside part of the active material particles in the first regions. The electrode piece and battery provided by the present application are used for improving initial efficiency and solving the problem of serious expansion of the battery.

FIG. 2

EP 4 462 495 A1

**Description**

The present application claims priority to Chinese Patent Application No. 202210690099.7, entitled "ELECTRODE PIECE AND BATTERY", and filed with the China National Intellectual Property Administration on June 17, 2022, and Chinese Patent Application No. 202221520256.1, entitled "ELECTRODE PIECE AND BATTERY", and filed with the China National Intellectual Property Administration on June 17, 2022, which are hereby incorporated by reference in their entireties.

**TECHNICAL FIELD**

The present application relates to the technical field of lithium-ion batteries, and in particular, to an electrode piece and a battery.

**BACKGROUND**

As a key factor in the development of lithium-ion batteries, negative electrode material has attracted much attention. The negative electrode material of lithium-ion batteries mainly includes carbon material and non-carbon material.

At present, the negative electrode material of commercialized lithium-ion battery mainly uses graphite in the carbon material category as the negative electrode material. Silicon is the negative electrode material with the highest theoretical lithium storage capacity discovered so far, and its specific capacity is much higher than that of the currently commercialized negative electrode material graphite, which can significantly increase the energy density of lithium-ion batteries. However, it is found in application that the battery processed has the disadvantage of low initial efficiency.

Therefore, there is an urgent need to develop an electrode piece and a battery to solve the problem of low initial efficiency of the battery.

**SUMMARY**

The present application provides an electrode piece and a battery for improving the initial charging efficiency of the battery and at the same time solving the technical problem of serious expansion of the battery.

In order to achieve the above purposes, the application provides an electrode piece including a first current collector and a first functional layer arranged on at least one side of the first current collector. The first functional layer includes active material particles, and a surface of the first functional layer has a plurality of first regions and a plurality of second regions distributed alternately with the first regions;

an inorganic salt layer is arranged outside part of the active material particles in the first regions.

The electrode piece provided by the present application is able to form a protection in advance through the inorganic salt layer since part of the active material particles in the first region have an outer inorganic salt layer, thereby effectively improving the initial charging efficiency and also being able to avoid expansion rupture of silicon particles and meantime alleviate the repeated expansion and rupture of silicon particles due to lithium intercalation during the silicon cycle, which is beneficial to reducing the expansion of silicon, lowering the relative expansion of the battery, and achieving the effect of improving the expansion problem and cycle life of the battery.

In a possible implementation, a porosity of the first region is smaller than a porosity of the second region.

In a possible implementation, the porosity of the first region is 21% to 29%; and/or,
the porosity of the second region is 30% to 34%.

In a possible implementation, the inorganic salt layer includes at least one of lithium fluoride, lithium carbonate and lithium silicate; and/or
a mass percentage of the inorganic salt layer in the first region is greater than a mass percentage of the inorganic salt layer in the second region.

In a possible implementation, a width of the first region is $100\mu m$ to 4mm; and/or
a width of the second region is $0\mu m$ to 4mm.

In a possible implementation, a content ratio of an oxygen element to a silicon element is greater than 4:1 in the first region.

In a possible implementation, a content ratio of a fluorine element to a phosphorus element is greater than 7:1 in the first region.

In a possible implementation, a content ratio S1:S2 of a silicon element to an oxygen element satisfies: $2:1 \leq S1:S2 \leq 4:1$ in the second region.

In a possible implementation, a content ratio S3:S4 of the fluorine element to the phosphorus element of the first functional layer satisfies: $6:1 \leq S3:S4 \leq 7:1$ in the second region.

In a possible implementation, the active material particles include graphite and at least one of silicon material and silicon-oxygen material, and a mass of the silicon material and/or the silicon-oxygen material accounts for 7% to 50% of a total mass of the active material particles; or

the active material particles include carbon material and graphite; or
the active material particles include carbon material and at least one of silicon material and silicon-oxygen material, where a mass of the silicon material and/or the silicon-oxygen material accounts for 7% to 50% of a total mass of the active material particles.

In a possible implementation, a first included angle is formed between an extension direction of the first region and a width direction of the first functional layer, and the first included angle ranges from 0° to 45°; and/or

a ratio of a total area of the plurality of first regions to a total area of the second regions ranges from (0.7:1) to (3:1); and/or
taking a surface of the first current collector as a reference, a part of the first region farthest from the first current collector is higher than the second region, and a height difference between the part of the first region farthest from the first current collector and a part of the second region farthest from the first current collector is $0.1\mu m$ to $8\mu m$.

In a possible implementation, the electrode piece further includes a first tab and a first glue layer formed on the surface of the first functional layer, the first functional layer is provided with a first groove, and at least part of the first tab is located in the first groove and is covered by the first glue layer, and the first glue layer covers at least one of the first regions.

In a possible implementation, the first groove is provided with a first side, a second side and a third side, and a direction from the first side to the second side is parallel to a length direction of the first functional layer; where

a part of the first glue layer that is located on the surface of the first functional layer on the first side of the first groove covers 0 to 8 of the first regions; and/or
a part of the first glue layer that is located on the surface of the first functional layer on the second side of the first groove covers 0 to 8 of the first regions; and/or
a part of the first glue layer that is located on the surface of the first functional layer on the third side of the first groove covers 0 to 40 of the first regions; and/or
the part of the first glue layer that is located on the surface of the first functional layer on the first side of the first groove has a width of 1mm to 5mm in the length direction of the first functional layer; and/or
the part of the first glue layer located on the surface of the first functional layer on the second side of the first groove has a width of 1mm to 5mm in the length direction of the first functional layer.

The present application further provides a battery, including a sealed case and a battery cell located inside the sealed case. The battery cell includes a first electrode piece and a second electrode piece, where the first electrode piece is the above-mentioned electrode piece, and the polarity of the second electrode piece is opposite to the polarity of the first electrode piece.

In a possible implementation, one end of the second electrode piece covered by the first electrode piece is provided with a second glue layer, where,

the first region of the first electrode piece corresponding to the second glue layer is 0 to 20 in number; and/or
the second electrode piece includes a second current collector and a second functional layer arranged on a surface of the second current collector, one end of the second electrode piece is provided with a second non-coated foil zone that is free of the second functional layer, and the second glue layer covers at least part of the second non-coated foil zone and extends from the second non-coated foil zone to the surface of the second functional layer; and/or
the second glue layer has a width of 3mm to 5mm in a length direction of the second electrode piece.

In a possible implementation, the first functional layer is provided with a first groove, and the surface of the second electrode piece is provided with a third glue layer corresponding to a location of the first groove; and/or
the second electrode piece includes a second current collector, a second functional layer arranged on a surface of the second current collector and provided with a second groove, and a fourth glue layer that covers the second groove; the second electrode piece is provided with a second tab, and the second tab is at least partially located in the second groove and covered by the fourth glue layer.

In a possible implementation, the first groove has a first side, a second side and a third side, and a first projection of the third glue layer on the first electrode piece covers at least one of the first regions and satisfies that: a part of the

3

first projection that is located on the first side of the first groove covers 0 to 8 of the first regions; and/or

a part of the first projection that is located on the second side of the first groove covers 0 to 8 of the first regions; and/or
a part of the first projection that is located on the third side of the first groove covers 0 to 40 of the first regions; and/or
the second groove has a fourth side, a fifth side and a sixth side, and a projection of the fourth glue layer on the first electrode piece covers at least one of the first regions and satisfies that: a projection of a part of the fourth glue layer that is located on the fourth side of the second groove on the first electrode piece covers 0 to 8 of the first regions; and/or
a projection of a part of the fourth glue layer that is located on the fifth side of the second groove on the first electrode piece covers 0 to 8 of the first regions; and/or
a projection of a part of the fourth glue layer that is located on the sixth side of the second groove on the first electrode piece covers 0 to 40 of the first regions.

The electrode piece provided by the present application adopts a structure in which the second region and the first region are alternately distributed, and an inorganic salt layer is arranged outside the active material particles in the first region. The inorganic salt layer may be formed in advance through the lithium-replenished lithium source embedded into the active material particles in the first region, thereby protecting the silicon particles in the active material particles from expansion and rupture.

The electrode piece provided by the present application reduces the porosity by embedding the lithium source in advance, and at the same time alleviates the repeated expansion and rupture of the silicon particles caused by the lithium intercalation during the silicon cycle in the active material particles, which is beneficial to reducing the expansion of silicon, lowering the relative expansion of the battery and achieving the effect of improving the expansion problem and cycle life of the battery.

For the electrode piece and battery provided by the present application, a plurality of first regions are separated by the second regions, that is, every two adjacent first regions are separated by the second region that is not lithium-replenished, so that the lithium replenishment zone does not fully cover the entire surface of the first functional layer; and through the second region, the electrode piece may be more easily to be infiltrated, reducing the side reaction between metallic lithium and the electrolyte. In this way, it may improve the utilization rate of lithium metal, optimize the performance of the electrode piece and the battery, and improve the initial efficiency of the battery and also the charging cycle performance of the battery at the same time, which is beneficial to extending the service life of the battery. In addition, the first glue layer is arranged on the surface of the first functional layer and covers at least one first region, which may prevent the problem of lithium precipitation in the first region and improve the safety and other properties of the electrode piece and battery.

## BRIEF DESCRIPTION OF DRAWINGS

In order to illustrate the technical solutions in the embodiments of the present application or in the prior art more clearly, the drawings required in the description of the embodiments or in the prior art will be briefly introduced below. Obviously, the drawings in the following description are only some embodiments of the present application. For the person skilled in the art, other drawings may also be obtained based on these drawings without creative work.

FIG. 1 is a structural schematic diagram of an electrode piece provided by an embodiment of the present application.
FIG. 2 is an SEM image obtained from a first region and a second region of an electrode piece provided by an embodiment of the present application.
FIG. 3 is a CP image of a second region of an electrode piece provided by an embodiment of the present application.
FIG. 4 is a CP image of a first region of an electrode piece provided by an embodiment of the present application.
FIG. 5 is an X-ray energy spectrum scanning surface image of an electrode piece provided by an embodiment of the present application.
FIG. 6 is a partial enlarged analysis image of FIG. 5 of an electrode piece provided by an embodiment of the present application.
FIG. 7 is an XPS high-resolution energy spectrum diagram of local F1s of an electrode piece provided by an embodiment of the present application.
FIG. 8 is an XPS high-resolution energy spectrum diagram of local Si2p of an electrode piece provided by an embodiment of the present application.
FIG. 9 is a comparison graph of cycle performance curves of batteries provided by an embodiment of the present application and existing batteries.
FIG. 10 is a comparison graph of cycle performance expansion curves of batteries provided by an embodiment of the present application and existing batteries.
FIG. 11 is a structural schematic diagram of a cross section of a first electrode piece provided by an embodiment of the present application, the cross section being perpendicular to a thickness direction of a negative electrode current collector.

FIG. 12 is a structural schematic diagram of a cross section of a first electrode piece provided by an embodiment of the present application, the cross section being perpendicular to a thickness direction of a negative electrode current collector.

FIG. 13 is a structural schematic diagram of a cross section of a second electrode piece provided by an embodiment of the present application, the cross section being perpendicular to a thickness direction of a negative electrode current collector.

FIG. 14 is a surface morphology image of a first electrode piece provided by an embodiment of the present application measured by a 3D microscope.

FIG. 15 is a schematic diagram of a placement structure of a lithium strip during the manufacturing process of a first electrode piece provided by an embodiment of the present application.

Description of reference signs:

10-First current collector; 11-First non-coated foil zone; 20-First functional layer; 21-First groove; 22-First end coverage zone; 23-Second end coverage zone; 30-First region; 40-Second region; 50-Inorganic salt layer; 60-Transition zone; 70-Pore; 80-Lithium strip; 81-First glue layer; 82-Second glue layer; 84-Fourth glue layer; 85-Third region; 86-Fourth region; 87-Fifth region; 91-First tab; 92-Second functional layer; 921-Second groove; 93-Second non-coated foil zone.

## DESCRIPTION OF EMBODIMENTS

In order to make the purpose, technical solutions and advantages of the present application clearer, the technical solutions in the present application will be clearly and completely described below in combination with the drawings in the present application. Obviously, the described embodiments are a part of the embodiments of the present application, but not all of them. Based on the embodiments in the present application, all other embodiments obtained by the person skilled in the art without creative work fall within the protection scope of the present application.

Initial efficiency affects the capacity of the battery. The initial efficiency refers to a ratio of the capacity released by the lithium-ion battery after its first full charge to the capacity of the lithium-ion battery after its first full charge. During the first charge and discharge process of the battery, the negative electrode will consume a portion of the lithium ions from the positive electrode, so as to form a solid electrolyte interface (SEI) film. The lithium ions consumed by formation of the SEI film are irreversible. As a result, reduced lithium ions are able to eventually return to the positive electrode, and the actual capacity of the battery is lower than the theoretical capacity correspondingly.

In addition, since lithium ions are easily embedded into the silicon material of the negative electrode, which causes the silicon particles to be ruptured and expand, reducing the capacity and cycle life of the battery.

In view of the above background, by providing an inorganic salt layer, the electrode piece and battery provided by the present application are able to alleviate the re-expansion and rupture of silicon particles caused by embedding of lithium ions into silicon particles during charging process, thereby reducing the volume expansion of the electrode piece during the charging process, and improving the capacity and cycle life of the battery. A porosity of a first region is 21% to 29%, which may improve the expansion problem and cycle life of the battery.

An electrode piece and a battery provided by the present application are described below with reference to the accompanying drawings.

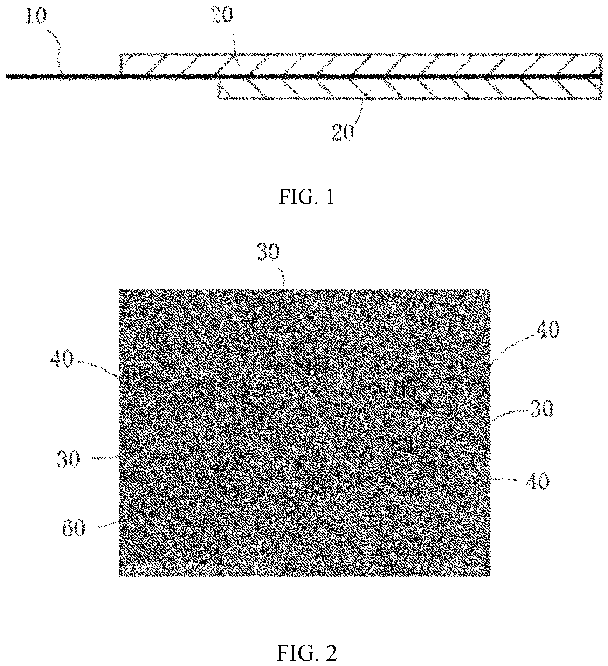

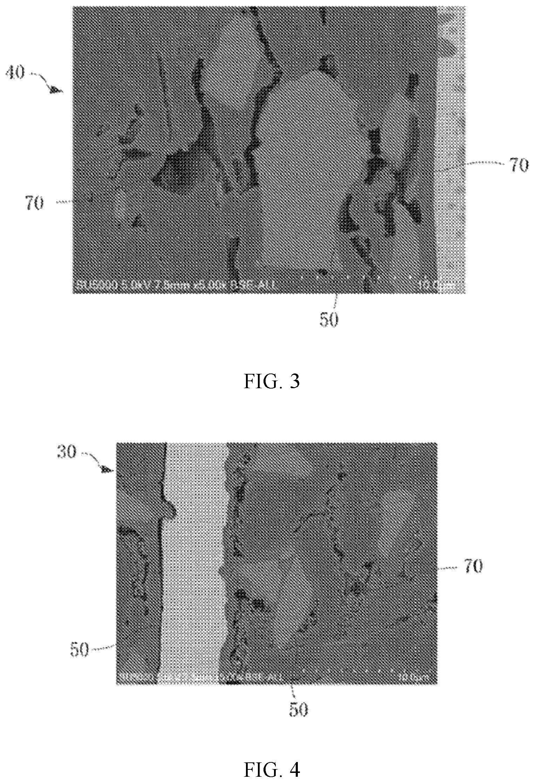

Referring to FIG. 1, the present application provides an electrode piece, including a first current collector 10 and a first functional layer 20 arranged on at least one side of the first current collector 10. Referring to FIG. 2 and FIG. 4, the first functional layer 20 includes active material particles. The surface of the first functional layer 20 has several first regions 30 and several second regions 40 distributed alternately with the first regions 30. In the first regions 30, a part of active material particles have an outer inorganic salt layer 50.

In a possible implementation, the active material particles include a carbon material and at least one of silicon material and silicon-oxygen material. A lithium material layer is arranged on the surface of the first functional layer 20; and by reacting with the lithium material layer, the first region 30 is formed by a portion of the first functional layer 20 and the silicon particle of at least one of silicon material, silicon-oxygen material, and carbon material that are located in the first region 30 is surrounded by the inorganic salt layer 50.

The present application provides an electrode piece, by arranging a lithium material layer on the surface of a first functional layer 20 and the reaction between active material particles and the lithium material layer, a portion of the first functional layer 20 forms the first region 30. A part of active material particles has an inorganic salt layer 50 outside, and the silicon particles of at least one of silicon material, silicon-oxygen material and carbon material located in the first region 30 may be wrapped with the inorganic salt layer 50.By the intercalation of lithium source from the lithium material layer at the periphery of the silicon particles of at least one of silicon material and hard carbon material located in the first region 30, the inorganic salt layer 50 is formed in advance so as to protect the silicon particles from expansion and rupture and at the same time alleviate the repeated expansion and rupture of the silicon particles caused by lithium intercalation during the silicon cycling process, which is beneficial to reducing the expansion of silicon, thereby lowering the relative expansion of the battery, and achieving the effects of improving the expansion problem and cycle life of the battery.

A porosity of the first region 30 is less than a porosity of the second region 40. The porosity of the first region 30 is 21% to 29%, and the porosity of the second region 40 is 30% to 34%. This is because in the first region 30, the inorganic salt layer 50 fills in the pores 70 of the first functional layer 20 so that the porosity of the first region is 21% to 29%. The porosity is decreased by forming the inorganic salt layer 50 in advance, which alleviates the repeated expansion and rupture of silicon particles caused by lithium insertion during the silicon cycling process, and is beneficial to reducing the expansion of silicon, thereby bringing down the relative expansion of the battery.

In the first region 30, the areal density of lithium in the lithium material layer is 0.09mg/cm$^2$ to 0.5mg/cm$^2$, and the active material particles of the first functional layer 20 include graphite and at least one of silicon material and silicon-oxygen material, where the mass of the silicon material and/or the silicon-oxygen material accounts for 7% to 50% of the mass of the active material particles, so that the amount of lithium element matches with the amount of the silicon material and/or the silicon-oxygen material.

In a possible implementation, the first functional layer 20 is an active material layer, and the active material particles of the first functional layer 20 include hard carbon material and graphite. Correspondingly, in the first region 30, the areal density of the lithium in the lithium material layer is 0.09mg/cm$^2$ to 0.5mg/cm$^2$, so that the amount of lithium element matches with the amount of silicon particles.

In a possible implementation, the active material particles include carbon material and graphite, and the carbon material is hard carbon.

In the first region 30, the areal density of lithium in the lithium material layer is 0.09mg/cm$^2$ to 0.5mg/cm$^2$, and the active material particles of the first functional layer 20 include carbon material and at least one of silicon material and silicon-oxygen material, where the mass of the silicon material and/or the silicon-oxygen material accounts for 7% to 50% of the mass of the active material particles, and the carbon material may be hard carbon.

It is easy to understand that the porosity of the first region 30 is a percentage of the total volume of the pores 70 between the silicon material and graphite to the total volume of the first region 30 in a natural state. The smaller the porosity, the smaller the space of pore 70 between the silicon material and the graphite, which is not conducive to the infiltration of the electrode piece. The larger the porosity, the smaller the amount of lithium ions replenished, which is not conducive to improving the initial efficiency. The pores 70 of the first region 30 become channels for infiltration during the aging process of the electrode piece. The electrolyte may infiltrate the electrode piece through the pores 70 of the first region 30, which may effectively solve the problem of difficult infiltration during the aging process of the electrode piece.

Referring to FIG. 4, in the present application, the amount of lithium ions replenished to the first region 30 is limited within a reasonable range, so that the porosity of the first region 30 is 21% to 29%, and the effects of improving expansion problem and cycle life of the battery may be achieved.

The lithium material layer may be a lithium strip 80, which may be in an irregular stripe shape.

Referring to FIG. 1, the electrode piece provided by the present application is a negative electrode piece. The first current collector 10 may be made of copper foil, titanium foil, nickel mesh, stainless steel foil, lithium-copper alloy film or carbon cloth.

Both sides of the first current collector 10 are each provided with a first functional layer 20.

The material constituting the inorganic salt layer 50 is an inorganic salt, and the inorganic salt layer 50 is formed by embedding lithium ions in the first region 30 into the silicon particles in the first functional layer 20. The mass percentage of the inorganic salt layer 50 in the first region 30 is greater than the mass percentage of the inorganic salt layer 50 in the second region 40.

The material constituting the inorganic salt layer 50 includes at least one of LiF or $Li_2CO_3$ or $Li_4SiO_4$. The inorganic salt layer 50 is formed by performing a chemical reaction between the first functional layer 20 and lithium ions. The chemical reaction is as follows.

$$PF_6^- + ne^- + nLi^+ \rightarrow LiF\downarrow + Li_xPF_y\downarrow$$

$$2CO_2 + 2e^- + 2Li^+ \rightarrow Li_2CO_3\downarrow + CO$$

$$4SiO_2 + 12Li^+ \rightarrow 3Si + 4Li_2O + Li_4SiO_4$$

During the process of machining the electrode piece, an SEI film is formed by making the first functional layer 20 in the first region 30 contact with lithium ions in advance to undergo a passivation reaction, so that when the processed battery is subjected to formation, the electrode piece provided by the present application may be reduced from absorbing lithium ions in the electrolyte again, which facilitates the lithium ions released from a second electrode piece not to be consumed, achieving the effect of improving the initial efficiency.

Referring to FIG. 2 and FIG. 3, the first functional layer 20 is further provided with second regions 40 distributed alternately with the first regions 30. Referring to FIG. 2, which is an image obtained by using a scanning electron microscope (SEM for short) to capture the first regions 30 and the second regions 40 with 50x to 5.0kx magnification, the first regions 30 and the second regions 40 are shown. The second region 40 is configured to allow a region free of lithium element to exist between the adjacent first regions 30. The second region 40 is a channel for the electrode piece to be infiltrated, which is beneficial to improving the infiltration effect of the electrode piece.

Electrolyte infiltration generally relies on capillary action. The present application provides an electrode piece that adopts a structure in which the second regions 40 and the first regions 30 are distributed alternately, and the electrolyte is able to penetrate through the second regions 40 to infiltrate the electrode piece, thereby reducing the obstruction of electrode piece infiltration, being beneficial to the uniform infiltration of electrode piece, improving the infiltration effect of the battery, and increasing the cycle life of the battery.

The porosity of the second region 40 is 30% to 34%. However, in the first regions 30, the porosity of the inorganic salt layer 50 is 21% to 29%. The porosity of the first region 30 is reduced by embedding the lithium material layer in advance, alleviating the repeated expansion and rupture of silicon particles caused by lithium intercalation during the silicon cycle process, which is beneficial to reducing the expansion of silicon and lowers the relative expansion of the battery.

The lithium material layer may be an ultra-thin metal lithium strip. The ultra-thin metal lithium strip is prepared using asynchronous rolling technology. A region containing lithium element corresponding to the first region 30 and a region containing no lithium element corresponding to the second region 40 are formed on the surface of the ultra-thin metal lithium strip. By transferring the lithium ions in the metal lithium strip to the first region 30, the first region 30 and the second region 40 are formed on the surface of the first functional layer 20.

Referring to FIG. 2, in order to meet the requirements of the areal density of lithium replenishment and infiltration uniformity, a width of the first region 30 is 100$\mu$m to 4mm, that is, the spacing between two adjacent second regions 40 is 100$\mu$m to 4mm.

In a possible implementation, the width of the first region 30 may be 100$\mu$m, 1mm, 2mm, 3mm or 4mm. In order to meet the requirements of the areal density of lithium replenishment and infiltration uniformity, a width of the second region 40 is 0$\mu$m to 4mm, that is, the spacing between two adjacent first regions 30 is 0$\mu$m to 4mm.

The present application provides an electrode piece, second regions 40 and first regions 30 are distributed alternately, and widths of the second region 40 and the first region 30 are limited, which is conducive to meeting the requirements of the areal density of lithium replenishment and improving the uniformity of electrolyte infiltration of electrode piece.

In a possible implementation, the width of the second region 40 may be 10$\mu$m, 1mm, 2mm, 3mm or 4mm. After lithium ions are locally embedded into the silicon particles located in the first region 30, they will migrate to the region where lithium ions are not embedded due to the difference in solid phase concentration, thereby forming a transition zone 60 between the first region 30 and the second region 40, and making lithium ions evenly distributed inside the first region 30. Therefore, the effect of uniform lithium insertion state is achieved, and the problem of lithium precipitation and purple spots caused by excessive local lithium ions is avoided, thereby improving the uniformity of the overall lithium insertion.

In the first region 30, the content ratio of oxygen element to silicon element is greater than 4:1.

In a possible implementation, in the first region 30, the content ratio of oxygen element to silicon element may be 4:1, 5:1, 6:1, or 7:1.

It is easy to understand that in the first region 30, if the content ratio of oxygen element to silicon element is greater than 4:1, it is easy to generate the lithium silicate, thereby consuming lithium ions and reducing the battery expansion rate during the cycle. If the content ratio of oxygen element to silicon element in the first region 30 is less than 4:1, it is indicated that the oxygen elements are too much and will have a chemical reaction with the replenished lithium ions to generate lithium oxide or lithium carbonate, which will reduce the utilization rate of lithium ions.

The first functional layer 20 further includes fluorine element and phosphorus element. In the first region 30, the content ratio of fluorine element to phosphorus element is greater than 7:1, which is conducive to the reaction of the lithium ions in the first region 30 with the electrolyte to form a denser passivation layer when the battery is first charged and discharged. The passivation layer is the SEI film. The passivation layer is an excellent conductor of lithium ions, which can facilitate the transmission of lithium ions in the passivation layer. The lithium ions enter into the graphite surface in the first functional layer 20 for lithium deintercalation, which is beneficial to improving the cycle performance of the battery and thereby increasing the service life of the battery.

Considering that the electrolyte uses lithium hexafluorophosphate, the content ratio of fluorine element to phosphorus element in the first region 30 is greater than 7:1. The excess fluorine elements will have a chemical reaction with lithium ions to form lithium fluoride, that is, the passivation layer. During the formation of the SEI film, part of the lithium ions are consumed, which increases the irreversible capacity of the first charge and discharge and reduces the charge and discharge efficiency.

In the second region 40, the content ratio S 1: S2 of oxygen element to silicon element satisfies: $2:1 \leq S1:S2 \leq 4:1$.

In the second region 40, the content ratio S3:S4 of the fluorine element to the phosphorus element in the first functional layer 20 satisfies: $6:1 \leq S3:S4 \leq 7:1$.

Example 1

In the present example, the active material particles of the first functional layer 20 include graphite and silicon-oxygen material. The mass of silicon-oxygen material accounts for 7% of the total mass of graphite and silicon-oxygen material. Correspondingly, in the first region 30, the areal density of lithium in the lithium material layer may be 0.12, and the porosity of the first region 30 is 0.29. The content ratio of oxygen element to silicon element in the first region 30 is 5:1; and the content ratio S1:S2 of silicon element to oxygen element in the second region 40 is 1:4.

Example 2

In the present example, the active material particles of the first functional layer 20 include graphite and silicon particles, where the mass of silicon particles accounts for 20% of the total mass of graphite and silicon particles. Correspondingly, in the first region 30, the areal density of lithium in the lithium material layer may be 0.22, and the porosity of the first region 30 is 0.27. The content ratio of oxygen element to silicon element in the first region 30 is 6:1, and the content ratio S1:S2 of silicon element to oxygen element in the second region 40 is 1:4.

Example 3

In the present example, the active material particles of the first functional layer 20 include graphite and silicon-oxygen material. The mass of silicon-oxygen material accounts for 30% of the total mass of graphite and silicon-oxygen material. Correspondingly, in the first region 30, the areal density of lithium in the lithium material layer may be 0.32, and the porosity of the first region 30 is 0.25. The content ratio of oxygen element to silicon element in the first region 30 is 6.5:1, and the content ratio S1:S2 of silicon element to oxygen element in the second region 40 is 1:4.

Example 4

In the present example, the active material particles of the first functional layer 20 include graphite and silicon-oxygen material. The mass of silicon-oxygen material accounts for 40% of the total mass of graphite and silicon-oxygen material. Correspondingly, in the first region 30, the areal density of lithium in the lithium material layer may be 0.42, and the porosity of the first region 30 is 0.23. In the content ratio of oxygen element to silicon element in the first region 30 is 7:1, and the content ratio S1: S2 of silicon element to oxygen element in the second region 40 is 1:4.

Example 5

In the present example, the active material particles of the first functional layer 20 include graphite and silicon-oxygen material. The mass of silicon-oxygen material accounts for 50% of the total mass of graphite and silicon-oxygen material. Correspondingly, in the first region 30, the areal density of lithium in the lithium material layer may be 0.5, and the porosity of the first region 30 is 0.21. The content ratio of oxygen element to silicon element in the first region 30 is 7.5:1, and the content ratio S1:S2 of silicon element to oxygen element in the second region 40 is 1:4.

In the above-mentioned Examples 1 to 5, the active material particles of the first functional layer 20 include graphite and at least one of silicon material and silicon-oxygen material, where the mass of silicon material accounts for 7% to 50% of the total mass of active material particles. Graphite may be artificial graphite or natural graphite. Correspondingly, in the first region 30, the areal density of lithium in the lithium material layer is $0.09 \, mg/cm^2$ to $0.5 \, mg/cm^2$. In this way, the amount of lithium element matches with the amount of silicon particles. If the amount of lithium element is too large, lithium ions will react with the electrolyte and be precipitated out, reducing the utilization rate of lithium ions; if the amount of lithium element is too small, it will make the effect of lithium replenishment not obvious, thus not improving the initial efficiency significantly.

Example 6

In the present example, the active material particles of the first functional layer 20 include hard carbon and silicon-oxygen material. The mass proportion of the silicon-oxygen material accounts for 7% of the total mass of hard carbon and silicon-oxygen material. Correspondingly, in the first region 30, the areal density of lithium in the lithium material layer may be 0.18, and the porosity of the first region 30 is 28%. The content ratio of oxygen element to silicon element in the first region 30 is 6:1, and the content ratio S1: S2 of silicon element to oxygen element in the second region 40 is 1:4.

Example 7

In the present example, the active material particles of the first functional layer 20 include hard carbon and silicon-oxygen material. The mass proportion of silicon-oxygen material accounts for 30% of the total mass of hard carbon and silicon-oxygen material. Correspondingly, in the first region 30, the areal density of lithium in the lithium material layer may be 0.28, and the porosity of the first region 30 is 26%. The content ratio of oxygen element to silicon element in the first region 30 is 7:1, and the content ratio S1:S2 of silicon element to oxygen element in the second region 40 is 1:4.

Example 8

In the present example, the active material particles of the first functional layer 20 include hard carbon and silicon-oxygen material. The mass proportion of the silicon-oxygen material accounts for 50% of the total mass of hard carbon and silicon-oxygen material. Correspondingly, in the first region 30, the areal density of lithium in the lithium material layer may be 0.34, and the porosity of the first region 30 is 24%. The content ratio of oxygen element to silicon element in the first region 30 is 8:1, and the content ratio S1:S2 of silicon element to oxygen element in the second region 40 is 1:4.

In the above-mentioned Examples 6 to 8, the active material particles of the first functional layer 20 include hard carbon and silicon-oxygen material. The mass proportion of the silicon-oxygen material accounts for 7% to 50% of the total mass of the hard carbon and silicon-oxygen material. Correspondingly, in the first region 30, the areal density of lithium in the lithium material layer is 0.09mg/cm$^2$ to 0.5mg/cm$^2$. In this way, the amount of lithium element matches with the amount of silicon-oxygen material, which not only avoids the reaction between lithium element and the electrolyte and the precipitation of lithium element due to excessive lithium element, and the reduction of the utilization rate of lithium ions, but also avoids the situation where too small amount of lithium element may result in less obvious lithium replenishment and less obvious improvement of the initial efficiency.

Here, an electrode piece provided in Example 1 of the present application is selected, and Al K$\alpha$ is used as the excitation source (1486.6eV) in the first region 30 and the second region 40 to detect F1s and Si2p respectively.

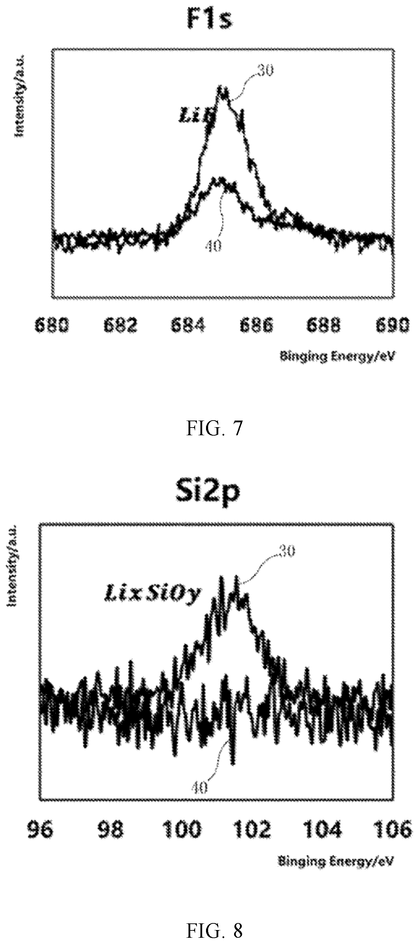

Referring to FIG. 7 and FIG. 8, the content proportion of the inorganic salt layer 50 in the first region 30 is greater than that of the inorganic salt layer 50 in the second region 40. In FIG. 7, the ordinate represents peak intensity, and the abscissa represents binding energy. The higher peak value shows that the content of the tested element is higher. As can be seen from FIG. 7, the characteristic peak of the binding energy in the region of 680-690eV corresponds to F1s, and the peak intensity of the first region 30 is greater than that of the second region 40, indicating that the LiF content of the first region 30 is higher than that of the second region 40.

In FIG. 8, the ordinate represents peak intensity, and the abscissa represents binding energy. The higher peak value shows that the content of the tested element is higher. As can be seen from FIG. 8, the characteristic peak of the binding energy in the region of 100-105eV corresponds to Si2p, and the peak intensity of the first region 30 is greater than that of the second region 40, indicating that the Li$_x$SiO$_y$ content of the first region 30 is higher than that of the second region 40, where x=4, and y=4.

During processing, after being coated with the first functional layer 20 on its surface, the first current collector 10 is baked in a dry environment at a temperature of 90°C for 24 hours so that the moisture is controlled below 300ppm to obtain a semi-finished electrode piece. An ultra-thin metal lithium strip is prepared using asynchronous rolling technology, and is laminated with the semi-finished electrode piece to obtain an electrode piece.

The present application further provides a battery, including a sealed case and a battery cell located inside the sealed case. The battery cell includes a first electrode piece and a second electrode piece, and the first electrode piece is the above-mentioned electrode piece.

In a possible implementation, the first electrode piece is the above-mentioned electrode piece and is a negative electrode piece; and the second electrode piece is a positive electrode piece.

During processing, the first electrode piece, the second electrode piece and a separator are stacked in sequence so that the separator is located between the first electrode piece and the second electrode piece to play a role of isolating the first electrode piece and the second electrode piece; and then they are wound together to obtain a battery cell. The battery cell is placed in the sealed case, and the electrolyte is injected into the sealed case. After vacuum encapsulation of the sealed case, settlement and formation; charging at a constant current of 0.1C to 4% State of Charge (SOC for short) and then charging at a constant current of 0.2C to 10% SOC; and shaping, capacity testing and other procedures, a pouch lithium-ion battery is obtained.

In a possible implementation, the sealed case may be an aluminum laminated film, and the electrolyte may be lithium hexafluorophosphate.

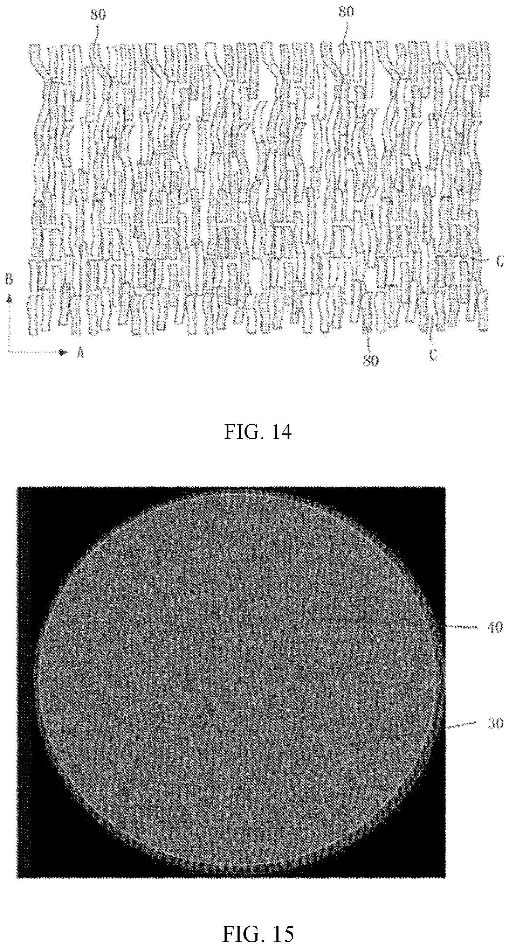

In a possible implementation, the first region 30 is a lithium-replenishment region, and the second region 40 is a non-lithium-replenishment region. After 3D microscopy test, the first region 30 is brighter and the second region 40 is darker (as shown in FIG. 14).

In a possible implementation, lithium may be replenished according to the following process: as shown in FIG. 15, a plurality of lithium strips 80 is distributed at intervals on the surface of the first functional layer 20. There are gaps C between the plurality of lithium strips 80, causing the surface of the first functional layer 20 to be exposed. After the formation and other reactions during the battery preparation, the region provided with lithium strips 80 forms a lithium-replenishment region, namely, the first region 30; the gap C existing between the plurality of lithium strips 80 forms a non-lithium-replenishment region, namely, the second region 40. As shown in FIG. 14, the first regions 30 are in a discontinuous state; and using the second regions 40 is conducive to the infiltration of the electrolyte to the electrode piece, which may improve the utilization rate of the lithium strips and optimize the performance of electrode piece and battery.

Where, during the lithium replenishing, the electrode piece precursor with the first functional layer 20 may be baked at around 90°C for about 24 hours in a dry environment to control its moisture below 300ppm; and then the lithium strips 80 are placed on the surface of the baked electrode piece, and after lamination and other treatments, the lithium strips 80 are compounded with the first functional layer 20 for lithium replenishment.

The above-mentioned electrode piece may be prepared by a coating method. The preparation process generally includes compounding (preparing slurry), coating (coating the slurry on the surface of the current collector substrate to form the first functional layer 20), rolling, cutting (performing cutting according to the preset size, shape and other parameters of the electrode piece), baking, etc., and then subsequent processes such as lithium replenishment.

In a possible implementation, the lithium strips 80 used may include short lithium strips whose length is smaller than the width of the first functional layer 20 (the distribution of the short lithium strips is shown in FIG. 15, and the surface topography of the electrode piece formed by the short lithium strips is shown in FIG. 14). A plurality of short lithium strips may be placed in sequence along the width direction of the first functional layer 20 (the direction shown by arrow B) to form a column. Then, according to this process, along the length direction of the first functional layer 20 (the direction shown by arrow A), another column is formed. The length of each column may be less than or equal to the width of the electrode piece (so that the length of the column formed by the arrangement of the first regions 30 is less than or equal to the width of the electrode piece). But being not limited to this, a plurality of short lithium strips may also be distributed irregularly on the surface of the first functional layer 20, or long lithium strips with a length substantially the same as the width of the first functional layer 20 may be distributed at intervals on the surface of the first functional layer 20 (for example, a gap exists between any two adjacent long lithium strips, and after formation, the gap forms the second region 40).

In a possible implementation, the amount of lithium strip 80 may satisfy: the ratio of the total mass of lithium strips 80 disposed on the surface of first functional layer 20 to the area of the surface of the first functional layer 20 (the side facing away from the first current collector 10) is (0.09 to 0.5)mg:1m$^2$.

In a possible implementation, a thickness of the lithium strip 80 may be 1.9$\mu$m to 9$\mu$m. Due to the extremely high theoretical specific capacity of pure metallic lithium, the thickness of the metallic lithium usually needs to be about 1$\mu$m if the entire surface of the electrode piece is replenished with lithium. The preparation is extremely difficult and the consistency is very poor. However, in the present application, ultra-thin metal lithium strips are used to replenish lithium in a manner of non-full surface coverage. The ultra-thin metal lithium strips present a discontinuous coverage state of stripes/ripples, etc. on the surface of the first functional layer 20, which can effectively replenish lithium and improve the utilization rate of lithium metal. At the same time, it also has the advantages such as simple preparation and good consistency.

In a possible implementation, a lithium ingot is generally pressed to a thickness of micron level, and then the obtained micron level lithium strip is placed on the surface of the first functional layer 20 for lithium replenishment. For example, in some embodiments, the lithium ingot of 200$\mu$m to 2mm is rolled into the lithium strip 80 with a thickness of 1.9$\mu$m to 9$\mu$m, which is then placed on the surface of the first functional layer 20 for lithium replenishment.

In a possible implementation, the inorganic salt layer may be an inorganic salt layer formed by embedding the lithium source from lithium replenishment into the active material particles in the first region 30. That is, the material constituting the inorganic salt layer is an inorganic salt, and the inorganic salt layer is formed by embedding the lithium element replenished in the first region 30 into the active material particles of first region 30. The inorganic salt layer includes, for example, at least one of lithium fluoride, lithium carbonate, lithium silicate and the like.

In a possible implementation, a first region 30 and a second region 40 are staggered/distributed alternately, that is, a plurality of first regions 30 and a plurality of second regions 40 are distributed on the surface of the first functional layer 20, and the plurality of second regions 40 separate the surface of the first functional layer 20 to form the plurality of first regions 30.

Where, the plurality of first regions 30 may be distributed along the length direction of the first functional layer 20/electrode piece (the direction indicated by the arrow A), that is, the plurality of first regions 30 and the plurality of second regions 40 are sequentially staggered along the length direction of the first functional layer 20/electrode piece.

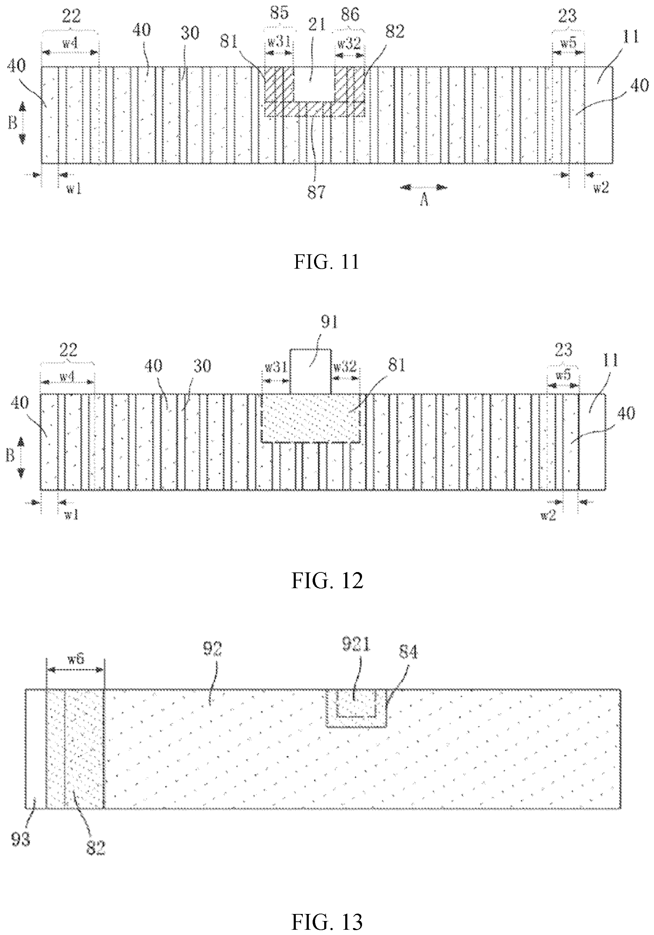

In a possible implementation, as shown in FIG. 11, FIG. 12 and FIG. 14, the extension direction/length direction of the first region 30 may form a first included angle with the width direction of the first functional layer 20. The first included angle may range from 0° to 60°. In a possible implementation, the first included angle may range from 0° to 45°, for example, 0 (that is, the length direction of the first region 30 is parallel to the width direction of the first functional layer 20), 10°, 20°, 30°, 40° or 45°, etc., which is beneficial to lithium replenishment and electrolyte infiltration of the electrode piece; and meantime, it does not affect the winding of the electrode piece along its length direction, which is conducive to the production and performance of the battery.

Where, the extending directions of the plurality of first regions 30 may be the same or different, that is, the first included angles that are formed by the extending directions with the width direction of the first functional layer 20 may be the same or different.

In addition, in the width direction of the first functional layer 20/electrode piece, the distance between the first region 30 closest to the outer edge/edge of the first functional layer 20 and the outer edge of the first functional layer 20 is A, which may be 0mm to 2mm, for example, 0 (that is, the first region 30 is flush with the outer edge of the first functional layer 20), 0.5mm, 1mm, 1.5mm, 2mm, etc.; the ratio of A to the width of the first functional layer 20 may be 0 to 0.03, for example, 0, 0.01, 0.02, 0.03, etc.

In a possible implementation, in the width direction of the first functional layer 20, a column is formed by at least one first region 30, and the column may be in a continuous state, that is, the column is formed by one first region 30 (the middle of the column is not interrupted by the second region 40); or, the column may also be in a discontinuous state, that is, the column is composed of a plurality of first regions 30 sequentially arranged along the width direction of the first functional layer 20, where the second region 40 is arranged between two adjacent first regions 30 and the column is interrupted by the second region 40.

In addition, the first region 30 extends along the width direction of the first functional layer 20. In the width direction of the first functional layer 20, the first region 30 may have a substantially straight structure, or may have a bent/curved structure.

In addition, in the length direction of the first functional layer 20/electrode piece, the distance between the first region 30 closest to the outer edge of the first functional layer 20 and the outer edge of the first functional layer 20 (that is, the width of the second region 22 closest to the outer edge of the first functional layer 20 in the length direction of the first functional layer 20) may be 0mm to 4mm, for example, $100\mu m$ to 4mm.

In a possible implementation, the first functional layer 20 has a first end and a second end which are opposite to each other; and the direction from the first end to the second end is parallel to the length direction of the first functional layer 20. The distance w1 between the first region 30 closest to the first end and the edge of the first end of the first functional layer 20 (the edge of the first functional layer 20) is $100\mu m$ to 4mm, for example, $100\mu m$, $300\mu m$, $500\mu m$, $700\mu m$, 1mm, 2mm, 3mm, 4mm, etc. That is, along the length direction of the first functional layer 20, the width of the second region 40 existing between the first region 30 closest to the first end and the edge of the first end is w1. The distance w2 between the first region 30 closest to the second end (the edge of the first functional layer 20) and the edge of the second end of the first functional layer 20 may be $0\mu m$ to 4mm, for example, 0, $100\mu m$, $300\mu m$, $500\mu m$, $700\mu m$, 1mm, 2mm, 3mm, 4mm, etc.

Where, when w2=0, there is no second region between the first region 30 closest to the second end of the first functional layer 20 and the edge of the second end of the first functional layer 20 (that is, the width w2 of the second region 40 between the first region 30 closest to the second end and the edge of the second end is 0). When w2 is not 0 (i.e. $0<w2\leq4mm$), in the length direction of the first functional layer 20, the second region 40 exists between the first region 30 closest to the second end of the first functional layer 20 and the edge of the second end, and the width of the second region 40 is w2.

In a possible implementation, w1 and w2 may be the same or different.

In order to further balance the improvement of lithium replenishment and the improvement of electrolyte infiltration, in some preferred embodiments, the ratio of the total area of the plurality of first regions 30 (that is, the sum of the area of the plurality of first regions 30) to the total area of the plurality of second regions 40 (that is, the sum of the area of the plurality of second regions 40) is (0.7:1) to (3:1), for example, 0.7:1, 1:1, 1.5:1, 2:1, 2.5:1, or 3:1, etc.

Where, a microscope may be used to capture the outlines of the first regions 30 and the second regions 40, so as to determine the ratio of the total area of the plurality of first regions 30 to the total area of the plurality of second regions 40.

Generally, a boundary exists between the first region 30 and the second region 40. Taking the surface of the first current collector 10 as a reference, the first region 30 is higher than the second region 40, that is, in the thickness direction of the first functional layer 20, the distance *a* between the part of the first region 30 farthest from the first current collector 10 to the first current collector 10 is greater than the distance b between the part of the second region 40 farthest from the first current collector 10 to the first current collector 10 (a>b).

In some embodiments, the height difference between the part of the first region 30 farthest from the first current collector 10 and the part of the second region 40 farthest from the first current collector 10 is 0.1μm to 8μm (i.e., a-b=0.1μm to 8μm), for example, 0.1μm, 0.5μm, 1μm, 2μm, 3μm, 4μm, 5μm, 6μm, 7μm or 8μm, etc.

In a possible implementation, the method of measuring the height difference between the first region 30 and the second region 40 may include, but is not limited to, the following methods: (1) sputtering the lithium replenished electrode piece with a Cross section Polisher (CP) equipment to obtain a cross section, then capturing the cross section using the scanning electron microscope (SEM) with a required magnification to obtain the height difference; (2) capturing with a 3D microscope with a required magnification, and then measuring the height difference with a profiler.

In some embodiments, the first functional layer 20 is provided with a first groove 21, and the first groove 21 is covered with a first glue layer 81. Where, the first groove 21 may be used as a tab groove for arranging a tab. In some embodiments, the electrode piece further includes a first tab 91 and the first glue layer 81 formed on the surface of the first functional layer 20, and at least part of the first tab 91 is located in the first groove 21 and covered by the first glue layer 81 (that is, the part of the first tab 91 located inside the first groove 21 is covered by the first glue layer 81). In this way, the tab region may be protected and the safety of the electrode piece and battery may be improved. For example, lithium in the lithium replenishment region around the first tab may be prevented from migrating to a positive tab region (corresponding to a tab groove where a positive tab is located) during charging and discharging, and the resulting lithium precipitation problem in a negative tab region is avoided.

In a possible implementation, the first glue layer 81 is arranged on partial region of the surface of the first functional layer 20, that is, it does not completely cover the first functional layer 20. The first glue layer 81 covers at least one first region 30.

In a possible implementation, at least partial region of the bottom surface of the first groove 21 is the surface of the first current collector 10, that is, partial region of the bottom surface of the first groove 21 exposes the first current collector 10, and the first tab 91 may be connected to the first current collector 10 exposed on the bottom surface of the first groove 21. Specifically, it may be welded to the first current collector 10 exposed on the bottom surface of the first groove 21.

Where, the electrode piece may be in a structure of Center-Placed Tab (CPT), that is, the tab is arranged in the middle of the electrode piece instead of the end.

In a possible implementation, at least two sides of the first groove 21 are the first functional layers 20. In some embodiments, on a plane perpendicular to the thickness direction of the first current collector 10, one side of the first groove 21 is flush with one long side of the first current collector 10, and the remaining sides are surrounded by the first functional layer 20. That is, the first groove 21 has an opening towards one long side of the first current collector 10. After the first tab 91 is set, one end of the first tab 91 may protrude out of the outer edge of the first current collector 10 through the opening. Specifically, the first tab 91 protrudes out of the outer edge of the first current collector 10 through the opening along its length direction, and a portion of the first tab 91 located in the first groove 21 (that is, the portion does not protrude out of the first current collector 10) is covered by the first glue layer 81 (as shown in FIG. 12).

Where the length direction of the first tab 91 is parallel to the length direction of the first region 30/the second region 40 (that is, the extension direction of the first tab 200 and the extension direction of the first region 30/the second region 40 are consistent).

As shown in FIG. 11, the projection of a first groove 21 on the first current collector 10 is a rectangle. One short side of the first groove 21 is flush with one of the long sides of the first current collector 10, and the remaining three sides are surrounded by the first functional layer 20.

In a possible implementation, the first groove 21 has a first side and a second side which are opposite to each other, and a third side and a fourth side which are opposite to each other. The third side/fourth side is located between the first side and the second side (the third side/fourth side is connected to the first side and the second side), and the direction from the first side to the second side is parallel to the direction from the first region to the second region.

Exemplarily, in FIG. 11 and FIG. 12, the first side is the left side, the second side is the right side, the third side is the lower side, and the a fourth side is the upper side. The left side, right side and lower side of the first groove 21 are all surrounded by the first functional layer 20, and there is no first functional layer 20 for the upper side (that is, the upper side of the first groove 21 is flush with the edge of the first functional layer 20). The direction from the first side to the second side is parallel to the length direction of the first functional layer 20, and the direction from the third side to the fourth side is parallel to the width direction of the first functional layer 20.

Where, the first glue layer 81 extends to the surface of the first functional layer 20 around the first groove 21, and the portion of the first glue layer 81 located on the surface of the first functional layer 20 on the first side of the first groove 21 covers *a1* first regions 30, where *a1* ranges from 0 to 8, such as 0, 1, 2, 3, 4, 5, 6, 7, 8, etc. That is, the first region 30 that is located on the first side of the first groove 21 and in contact with the first glue layer 81 is *a1* in number. Namely, the surface of the first functional layer 20 includes a third region 85 located on the first side of the first groove 21 and covered by the first glue layer 81, and the number of the first region 30 extending into the third region 85 is *a1*.

Exemplarily, as shown in FIG. 11, *a1*=1.

In addition, the portion of the first glue layer 81 located on the surface of the first functional layer 20 on the second side of the first groove 21 covers *a2* first regions 30, where *a2* ranges from 0 to 8. That is, the first region 30 that is located on the second side of the first groove 21 and in contact with the first glue layer 81 is *a2* in number. Namely, the surface of the first functional layer 20 includes a fourth region 86 located on the second side of the first groove 21 and covered by the first glue layer 81, and the number of the first region 30 extending into the fourth region 86 is *a2*.

Exemplarily, as shown in FIG. 11, *a2*=1.

In addition, the portion of the first glue layer 81 located on the surface of the first functional layer 20 on the third side of the first groove 21 contacts with *a3* first regions 30, where *a3* ranges from 0 to 40, such as 0, 2, 5, 8, 10, 12, 15, 18, 20, 22, 25, 28, 30, 32, 35, 38, 40, etc. That is, the number of the first region 30 that is located on the third side of the first groove 21 and in contact with the first glue layer 81 is *a3*. Namely, the surface of the first functional layer 20 includes a fifth region 87 located on the third side of the first groove 21 and covered by the first glue layer 81, and the number of the first region 30 extending into the fifth region 87 is *a3*.

As shown in FIG. 11 and FIG. 12, *a3* is also the total number of the first regions 30 in contact with the first glue layer 81.

In a possible implementation, the first regions 30 (*a1* in number) extending into the third region 85 all extend into the fifth region 87, and the first regions 30 (*a2* in number) extending into the fourth region 86 all extend into the fifth region 87. The number of first regions 30 that extend into the fifth region 87 and abut with the first groove 21 is *a4*, where *a3*=*a1*+*a2*+*a4*.

Exemplarily, as shown in FIG. 11, *a3*=4, where *a1*=1, *a2*=1, and *a4*=2.

In a possible implementation, the width *w31* of the portion of the first glue layer 81 located on the surface of the first functional layer 20 on the first side of the first groove 21 along the length direction of the first functional layer 20 (also is the width of the third region 85 along the length direction of the first functional layer 20) is 1mm to 5mm, for example, 1mm, 1.5mm, 2mm, 2.5mm, 3mm, 3.5mm, 4mm, 4.5mm, 5mm, etc.

In addition, the width *w32* of the portion of the first glue layer 81 located on the surface of the first functional layer 20 on the second side of the first groove 21 along the length direction of the first functional layer 20 (namely the width of the fourth region 86 along the length direction of the first functional layer 20) is 1mm to 5mm, for example, 1mm, 1.5mm, 2mm, 2.5mm, 3mm, 3.5mm, 4mm, 4.5mm, 5mm, etc.

Where, *w*31 and *w*32 may be the same or different. A total width of the first glue layer 81 along the length direction of the first functional layer 20 is substantially equal to a sum *of w31,* the width of the first groove 21 along the length direction of the first functional layer 20, and *w32*.

In a possible implementation, the end edges of the opposite ends of the first region 30 are respectively flush with the edges of the opposite sides of the first functional layer 20, as shown in FIG. 11 and FIG. 12. The length of any first region 30 in the width direction of the first functional layer 20 is equal to the length of the first functional layer 20 where it is located. For example, the length of the first region 30 located on opposite sides (the first side and the second side) of the first groove 21 is equal to the width of the portions of the first functional layer 20 located on opposite sides of the first groove 21.

The length direction of the first functional layer 20 is also the length direction of the first current collector 10, and the width direction of the first functional layer 20 is also the width direction of the first current collector 10. The width of the first current collector 10 is basically equal to the maximum width (that is, the width of the portions of the first functional layer 20 located on opposite sides of the first groove 21 in FIG. 11 and FIG. 12).

In a possible implementation, as shown in FIG. 11, at least one end of the first current collector 10 may further be provided with a first non-coated foil zone 11 in which the first functional layer 20 is not provided.

The embodiments of the present application also provide a battery, including a first electrode piece, a separator, and a second electrode piece with a polarity opposite to that of the first electrode piece, which are stacked in sequence. The first electrode piece includes the above-mentioned electrode piece.

In a possible implementation, the battery includes a battery cell, and the battery cell includes the first electrode piece, the separator and the second electrode piece that are stacked in sequence. Specifically, the battery cell may be a winding-type battery cell composed of the first electrode piece, the separator and the second electrode piece, which are stacked in sequence and wound together. Where, the winding-type battery cell may be formed by winding along the length direction of the first electrode piece/separator/second electrode piece. In the winding-type battery cell, the first electrode piece, the separator and the second electrode piece are each provided with a bending part and straight parts connected to both ends of the bending part. The direction from one bending part to the other bending part is parallel to the length direction of the winding-type battery cell, and the direction from one straight part to the other straight part is parallel to the width direction of the winding-type battery cell.

Where, the separator plays an isolation role and is configured to separate the first electrode piece and the second electrode piece for preventing contact and short circuit between the two. The thickness of the separator may be 5μm to 16μm, for example, 5μm, 8μm, 10μm, 13μm, 16μm, etc. The separator may be a conventional separator in the art, for example, a coated separator including a substrate or a substrate with a coating coated thereon.

In a possible implementation, the second electrode piece includes a second current collector and a second functional layer 92 arranged on the surface of the second current collector. The second electrode piece has two opposite ends (respectively designated as a fifth end and a sixth end), at least one end of which has a second non-coated foil zone 93 that is not provided with a coating. Except the second non-coated foil zone 93, the rest of the second electrode piece is provided with the second functional layer 92. The part where the second functional layer 92 is connected to the second non-coated foil zone 93 usually has an uneven structure. In order to avoid damaging the separator and improve the safety performance of the battery, a second glue layer 82 may be provided on the portion of at least one end of the second electrode piece covered by the first electrode piece. Where, the portion of the second electrode piece covered by the first electrode piece is usually also the portion of the second electrode piece covered by the separator. The second functional layer 92 is an active material layer of the second electrode piece.

As shown in FIG. 13, the region of one end (fifth end) of the second electrode piece covered by the first electrode piece is provided with the second glue layer 82. The second glue layer 82 corresponds to the number of first region 30 of the first electrode piece is $x$, $0 \le x \le 20$, for example, $x$ is 0, 1, 2, 3, 4, 5, 6, 7, 8, 9, 10, 11, 12, 13, 14, 15, 16, 17, 18, 19 or 20.

In a possible implementation, as shown in FIG. 11 and FIG. 12, the first electrode piece has two opposite ends (respectively designated as a third end and a fourth end), and one end (the third end) has a first end coverage zone 22. The first end coverage zone 22 and the second glue layer 82 of the second electrode piece are positioned correspondingly, that is, the first end coverage zone 22 and the second glue layer 82 are covered each other (the projection of the second glue layer 82 on the first electrode piece essentially overlaps with the first end coverage zone 22). The width $w4$ of the first end coverage zone 22 in the length direction of the first electrode piece/second electrode piece is equal to the width $w6$ of the second glue layer 82 in the length direction of the first electrode piece/second electrode piece. There are $x$ first regions 30 in the first end coverage zone 22.

In some embodiments, the width $w6$ of the second glue layer 82 in the length direction of the second electrode piece is 3mm to 5mm, for example, $w6$ is 3mm, 3.5mm, 4mm, 4.5mm or 5mm, etc.

Where, as shown in FIG. 13, the second glue layer 82 covers at least part of the second non-coated foil zone 93 and extends from the second non-coated foil zone 93 to the surface of the second functional layer 92.

In addition, as shown in FIG. 11 to FIG. 13, the other end (the fourth end) of the first electrode piece has a second end coverage zone 23 covering the other end (the sixth end) of the second electrode piece, that is, the projection of the sixth end of the second electrode piece on the first electrode piece is located in the second end coverage zone 23 and does not extend beyond the second end coverage zone 23. There is no non-coated foil zone (that is, the second functional layer 92 is flush with the outer edge of the second current collector) at the sixth end of the second electrode piece, and the second glue layer 82 may not be provided.

In some embodiments, the width w5 of the second end coverage zone 23 in the length direction of the first electrode piece is 3mm to 5mm, for example, 3mm, 3.5mm, 4mm, 4.5mm, 5mm, etc.

As shown in FIG. 13, the surface of the second electrode piece is provided with a third glue layer corresponding to the position of the first tab 91/first groove 21 of the first electrode piece. The projection of the third glue layer on the first electrode piece may cover the first groove 21 and further prevent lithium precipitation from the negative electrode.

Where, the first projection of the third glue layer on the first electrode piece covers at least one first region 30, and satisfies that: the portion of the first projection located on the first side of the first groove 21 covers 0-8 of the first regions 30, for example, 0, 1, 2, 3, 4, 5, 6, 7, 8, etc., which may or may not be equal to $a1$; the portion of the first projection located on the second side of the first groove 21 covers 0-8 of the first regions 30, for example, 0, 1, 2, 3, 4, 5, 6, 7, 8, etc., which may or may not be equal to $a2$; the portion of the first projection located on the third side of the first groove 21 covers 0-40 of the first regions 30, for example, 0, 2, 5, 8, 10, 12, 15, 18, 20, 22, 25, 28, 30, 32, 35, 38, 40, etc., which may or may not be equal to $a3$.

In a possible implementation, the width of the portion of the first projection located on the first side of the first groove 21 along the length direction of the first functional layer 20 may be 1mm to 5mm, for example, 1mm, 1.5mm, 2mm, 2.5mm, 3mm, 3.5mm, 4mm, 4.5mm, 5mm, etc., which may or may not be equal to $w31$; the width of the portion of the first projection located on the second side of the first groove 21 along the length direction of the first functional layer 20 may be 3mm to 5mm, for example, 1mm, 1.5mm, 2mm, 2.5mm, 3mm, 3.5mm, 4mm, 4.5mm, 5mm, etc., which may or may not be equal to $w32$.

In a possible implementation, the first projection of the third glue layer on the first electrode piece may cover the first glue layer 81 or be covered by the first glue layer 81, for example, the two may be overlapped with each other.

In a possible implementation, the second electrode piece is provided with a second tab; and in the width direction of the battery cell, the first tab 91 is not overlapped with the second tab, that is, the projection of the first tab 91 perpendicular to the width direction of the battery cell does not overlap with the projection of the second tab perpendicular to the width direction of the battery cell.

In some embodiments, the second functional layer 92 is provided with a second groove 921 and a fourth glue layer 84 covering the second groove 921. The second tab is at least partially located in the second groove 921 and covered by the fourth glue layer 84 (that is, the part of the second tab located in the second groove 921 is covered by the second glue layer 82).

In a possible implementation, the second groove 921 serves as a tab groove for arranging the tab, and at least part of its bottom surface is the surface of second current collector (that is, the partial region of its bottom surface exposes the second current collector). The second tab may be connected to the second current collector exposed from the bottom surface of the second groove 921; specifically, the second tab may be welded to the second current collector exposed from the bottom surface of the second groove 921.

Where, as shown in FIG. 13, the second electrode piece may be in a structure of center-placed tab, that is, the second tab is arranged in the middle of the second electrode piece instead of the end of the second electrode piece.

In a possible implementation, at least two sides of the second groove 921 are the second functional layer 92. In some embodiments, as shown in FIG. 13, on a plane perpendicular to the thickness direction of the second current collector, one side of the second groove 921 is flush with one long side of the second current collector, and the remaining sides are surrounded by the second functional layer 92, that is, the second groove 921 has an opening towards one long side of the second current collector. After the second tab is set, one end of the second tab may protrude out of the outer edge of the second current collector through the opening. Specifically, the second tab protrudes out of the outer edge of the second current collector through the opening along its length direction, and the portion of the second tab located within the second groove 921 (that is, the portion not protruding out of the outer edge of the first current collector 10) is covered by the second glue layer 82. Where, the length direction of the second tab is parallel to the width direction of the second electrode piece.

As shown in FIG. 13, the projection of the second groove 921 on the second current collector is a rectangle; one short side of the projection is flush with one long side of the second current collector, and the remaining three sides are surrounded by the second functional layer 92.

In a possible implementation, the fourth glue layer 84 extends to the surface of the second functional layer 92 around the second groove 921 and is bonded to the second functional layer 92 around the second groove 921.

In a possible implementation, the second groove 921 has a fourth side, a fifth side and a sixth side, and the direction from the fourth side to the fifth side is parallel to the length direction of the second electrode piece. The projection of the fourth glue layer 84 on the first electrode piece covers at least one first region 30, and satisfies: the projection of the portion of the fourth glue layer 84 located on the fourth side of the second groove on the first electrode piece covers 0-8 of the first regions 30, for example, 0, 1, 2, 3, 4, 5, 6, 7 or 8, etc., which may or may not be equal to *al*; the projection of the portion of the fourth glue layer 84 located on the fifth side of the second groove on the first electrode piece covers 0-8 of the first regions 30, for example, 0, 1, 2, 3, 4, 5, 6, 7 or 8, etc., which may or may not be equal to *a2*; the projection of the portion of the fourth glue layer 84 located on the sixth side of the second groove on the first electrode piece covers 0-40 of the first regions 30, for example, 0, 2, 5, 8, 10, 12, 15, 18, 20, 22, 25, 28, 30, 32, 35, 38 or 40, etc., which may or may not be equal to *a3*.

In a possible implementation, the width of the portion of the fourth glue layer 84 located on the fourth side of the second groove along the length direction of the second electrode piece may be 1mm to 5mm, for example, 1mm, 1.5mm, 2mm, 2.5mm, 3mm, 3.5mm, 4mm, 4.5mm or 5mm, etc., which may or may not be equal to *w31;* the width of the portion of the fourth glue layer 84 located on the fifth side of the second groove along the length direction of the second electrode piece may be 3mm to 5mm, for example, 1mm, 1.5mm, 2mm, 2.5mm, 3mm, 3.5mm, 4mm, 4.5mm or 5mm, etc., which may or may not be equal to *w32.*

In a possible implementation, the shape, size and other parameters of the second groove 921 may be the same as or different from those of the first groove 21; and the shape, area and other parameters of the fourth glue layer 84 may be the same as or different from those of the first glue layer 81.

The thickness of the first glue layer 81, the second glue layer 82, the third glue layer and the fourth glue layer 84 may be each $10\mu m$ to $16\mu m$, for example, $10\mu m$, $11\mu m$, $12\mu m$, $13\mu m$, $14\mu m$, $15\mu m$, $16\mu m$, etc., specifically, they may be gummed paper.

It should be noted that, the coverage of the first region 30 by a certain glue layer (or its projection) as described above refers to that, in the length direction of the first functional layer 20, two opposite sides of the first region 30 covered by the glue layer are both located in the projection of the glue layer on the surface of the first functional layer 20 (that is, the first region 30 covered by the glue layer does not extend beyond the outer edge of the projection of the glue layer on the surface of the first functional layer 20); in the width direction of the first functional layer 20, the first region 30 covered by the glue layer may be partially located in the projection of the glue layer on the surface of the first functional layer 20 and partially located outside the projection of the glue layer on the surface of the first functional layer 20, or entirely located within the projection of the glue layer on the surface of the first functional layer 20.

Exemplarily, as shown in FIG. 11 and FIG. 12, 4 first regions 30 are covered by the first glue layer 81. In the length direction of the first functional layer 20, two opposite sides of each of the 4 first regions 30 are both located in the projection of the first glue layer 81 on the surface of the first functional layer 20. In the width direction of the first functional layer 20, the 4 first regions 30 partially extend into the projection of the first glue layer 81 on the surface of the first functional layer 20 and are partially located outside the projection of the first glue layer 81 on the surface of the first functional layer 20.

The above-mentioned battery may include a lithium-ion battery, which may be prepared by conventional methods in the art. The preparation process generally includes steps such as winding, encapsulation, liquid injection, aging, formation, secondary sealing, sorting and packaging. For example, the first electrode piece, the separator and the second electrode piece may be stacked and then wound to form a bare battery cell. The bare battery cell is placed in an outer packaging foil (such as aluminum laminated film), and then the electrolyte is injected into the battery cell. After vacuum encapsulation, standing, formation (for example, charging to 4% SOC (state of charge) at a constant current of 0.1C, and then charging to 10% SOC at a constant current of 0.2C), shaping and other processes, a pouch lithium-ion battery is obtained.

In order to illustrate an electrode piece provided in the present application, which may achieve the increase of the initial efficiency of battery and improvement of the battery expansion at the same time, the following tests are conducted on the produced electrode piece.

Test 1. Surface morphology test of the first region 30 and the second region 40

An scanning electron microscope (SEM) is adopted to capture with a magnification 500x to 1.0kx. Referring to FIG. 2, an SEM image magnified by 50x is shown. A scale is used to locate and measure the width of the first region 30 and the second region 40.

Here, the spacing between adjacent second regions 40, that is, the width of the first region 30, is listed. The measured values at H1, H2 and H3 in the figure are listed, where H1=537$\mu$m, H2=372$\mu$m, and H3=416$\mu$m.

Here, the spacing between adjacent first regions 30, that is, the width of the second region 40, is listed. The measured values at H4 and H5 in the figure are listed, where H4=267$\mu$m and H5=279$\mu$m.

Test 2. Cross-sectional morphology test of the first region 30 and the second region 40

Cross section polisher (CP for short) equipment is adopted to perform sputtering on the electrode piece provided in the present application to obtain a cross section. Then the scanning electron microscope (SEM for short) is adopted to capture the cross section with a magnification 500x to 1.0kx. Referring to FIG. 3, an SEM image magnified by 3.0kx of the second region 40 is shown. Referring to FIG. 4, an SEM image magnified by 3.0kx of the first region 30 is shown.

It can be clearly seen from FIG. 3 and FIG. 4 that the volume of the pores 70 in the first region 30 is smaller than the volume of the pores 70 in the second region 40, indicating that part of the pores 70 in the first functional layer 20 are filled by the inorganic salt layer 50.

Test 3. Element content test of the first region 30 and the second region 40

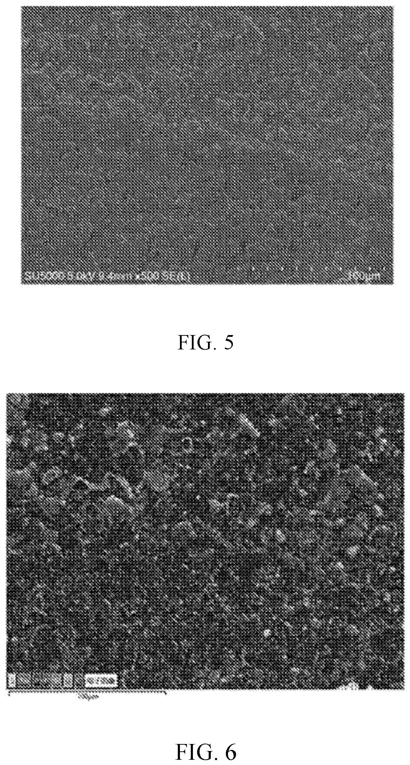

An X-ray Energy Dispersive Spectrometer (EDS for short) is adopted to perform a test analysis on the position where the SEM image is acquired. Referring to FIG. 5, a line scanning EDS image by the SEM under 500x is shown. Referring to FIG. 6, an enlarged image for partial testing at the position indicated by the dashed box in FIG. 5 is shown.

Test 4. Cycle test and expansion test

In the following, cycle test and expansion test are carried out for the batteries of two comparative groups and two experimental groups respectively. The only difference between the battery selected by the two comparative groups and the battery selected by the two experimental groups is that the battery selected by the two experimental groups adopts the electrode piece provided by the present application as the first electrode piece, while the battery selected by the comparative groups adopts the conventional first electrode piece containing no metallic lithium.

The testing process includes the following steps:

Step 1: leaving the battery to stand for 10 minutes in a temperature environment of 5°C±2°C;
Step 2: discharging the battery to the lower limit voltage at a battery discharging rate of 0.2C and leaving the battery to stand for 10 minutes;
Step 3: charging the battery to the upper limit voltage at a battery charging rate of 0.7C with 0.05C cut-off, and leaving the battery to stand for 10 minutes;
Step 4: discharging the battery to the lower limit voltage at a battery discharging rate of 0.2C, and then performing an initial capacity test;
Step 5: leaving the battery to stand for 10 minutes;
Step 6: charging the battery to the upper limit voltage at a battery charging rate of 3C with 0.05C cut-off, and then measuring the thickness of the battery;
Step 7: leaving the battery to stand for 10 minutes in a temperature environment of 25°C±2°C;
Step 8: discharging the battery to the lower limit voltage at a battery discharging rate of 1C and leaving the battery to stand for 10 minutes;

Step 9: charging the battery to the upper limit voltage at a battery charging rate of 3C with 0.05C cut-off, and leaving the battery to stand for 10 minutes;

Step 9: performing cycle of Step 8 and Step 9 for 1000 times, where during 0-200 cycles, the thickness of the battery in a fully charged state is tested after every 50 cycles; during 200-1000 cycles, the thickness of the battery in the fully charged state is tested after every 100 cycles, and in the temperature environment of 25°C, repeating Step 3 and Step 4 for capacity test, and testing the thickness of the battery in the fully charged state after 1000 cycles of step 3 and step 4.

Test 5. Capacity test

Batteries of four experimental groups and one control group with different target capacities are processed under different areal densities of lithium replenishment, using batteries having the same target capacity. These batteries are placed in a constant temperature environment of 25°C, charged to 4.48V at a constant current and constant voltage at a battery charging rate of 1C, then kept at a constant voltage to 0.05C cut-off, left to stand for 5 minutes, and then discharged to 3V at a battery discharging rate of 0.2C, and compared with the capacity data of 3 V The results are shown in Table 1 to Table 4.

Table 1

| Graphite doped with silicon | Control group | Experimental group 1 | Experimental group 2 | Experimental group 3 | Experimental group 4 |
|---|---|---|---|---|---|
| Target Capacity (mAh) | 2430 | | | | |
| Areal density of lithium in lithium material layer (mg/cm$^2$) | 0 | 0.12 | 0.15 | 0.17 | 0.19 |
| Silicon doping ratio | 15% | 7% | 10% | 13% | 15% |
| Porosity | 32% | 0.29 | 0.28 | 0.27 | 0.26 |
| Capacity of 3 V (mAh) | 2068 | 2438 | 2442 | 2455 | 2554 |
| Volume expansion rate after 100 charge-discharge cycles | 10.59% | 6.09% | 7.85% | 8.51% | 8.89% |
| Initial efficiency | 73.15% | 91.8% | 92.1% | 92% | 92.3% |

Table 2

| Graphite doped with silicon | Control group | Experimental group 1 | Experimental group 2 | Experimental group 3 |
|---|---|---|---|---|
| Target Capacity (mAh) | 4000 | | | |
| Areal density of lithium in lithium material layer (mg/cm$^2$) | 0 | 0.13 | 0.15 | 0.17 |
| Silicon doping ratio | 15% | 8% | 10% | 15% |
| Porosity | 0.32 | 0.29 | 0.29 | 0.28 |
| Capacity of 3V (mAh) | 3429 | 4025 | 4034 | 4078 |
| Volume expansion rate after 100 charge-discharge cycles | 7.52% | 6.23% | 6.60% | 6.77% |
| Initial efficiency | 76.02% | 89.68% | 90.73% | 91.32% |

Table 3

| Hard carbon doped with silicon | Control group | Experimental group 1 | Experimental group 2 | Experimental group 3 | Experimental group 4 |
|---|---|---|---|---|---|
| Target Capacity (mAh) | 4720 | | | | |
| Areal density of lithium in lithium material layer (mg/cm$^2$) | 0 | 0.17 | 0.19 | 0.22 | 0.26 |
| Silicon doping ratio | 15% | 7% | 10% | 15% | 20% |
| Porosity | 35% | 28% | 27% | 27% | 26% |
| Capacity of 3V (mAh) | 4363 | 4751 | 4766 | 4775 | 4781 |
| Volume expansion rate after 100 charge-discharge cycles | 9.63% | 6.85% | 6.99% | 7.39% | 7.51% |
| Initial efficiency | 77.74% | 88.22% | 89.29% | 90.04% | 91.05% |

Table 4

| Hard carbon doped with silicon | Control group | Experimental group 1 | Experimental group 2 | Experimental group 3 |
|---|---|---|---|---|
| Target Capacity (mAh) | 4300 | | | |
| Areal density of lithium in lithium material layer (mg/cm$^2$) | 0 | 0.21 | 0.22 | 0.23 |
| Silicon doping ratio | 15% | 7% | 10% | 15% |
| Porosity | 35% | 27% | 27% | 27% |
| Capacity of 3 V (mAh) | 4000 | 4312 | 4318 | 4324 |
| Volume expansion rate after 100 charge-discharge cycles | 5.73% | 4.51% | 5.24% | 5.49% |
| Initial efficiency | 77.05% | 89.53% | 89.79% | 89.88% |

It can be seen from Table 1 to Table 4, compared with the Control group 1, the capacity of 3V of Experimental group 1 to Experimental group 4 are significantly improved and all reach the designed values.

From Table 1 to Table 4, it can be intuitively obtained that the initial efficiency of the batteries in the experimental groups are higher than the initial efficiency of the battery in the corresponding control group, which indicates that the initial efficiency of the battery may be significantly improved in the present application. In addition, it can be intuitively obtained from Table 1 to Table 4 that the volume expansion rates of the batteries in the experimental groups after 100 charge-discharge cycles are all lower than that of the battery in the corresponding control group after 100 charge-discharge cycles, indicating that the technical problem that the electrode piece is prone to volume expansion may be significantly improved in the present application.

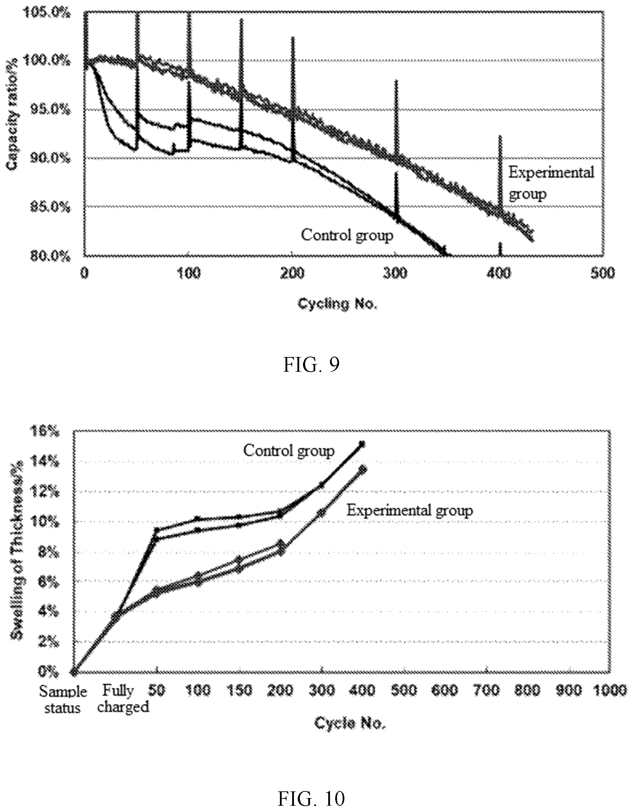

The test results of Step 9 are shown in FIG. 10. It can be seen from FIG. 10 that the abscissa represents the number of charging cycle, and the ordinate represents the swelling rate. Compared with the existing batteries, the battery provided by the present patent has a lower swelling rate when fully charged, having significant improvement effects on the battery expansion. The battery provided by the present patent is able to reduce the relative expansion during cycling by forming the silicate inorganic salt layer 50 in the first electrode piece.

Referring to FIG. 9, a comparison diagram of cycle performance curves of batteries provided by the present application and existing batteries is shown. The ordinate represents the capacity retention rate of the battery. It can be seen from FIG. 9 that the capacity of the battery provided by the present patent is reduced to 80% after 450 charge-discharge cycles. The capacity of the existing batteries is reduced to 80% after 350 charge-discharge cycles. Therefore, the cycle performance of the battery provided by the present patent is improved by about 100 charge-discharge cycles, and the corresponding battery capacity retention rate is increased by about 5% to 15%. This shows that through improvements in the present patent, there is significant improvement on the capacity of the battery and the cycle performance of the battery.

It should be noted here that the numerical values and numerical ranges involved in the present application are approximate values. Under the influence of the manufacturing process, there may be a certain range of errors, which may be regarded as negligible by those skilled in the art.

In the description of the present application, it should be understood that the terms "center", "length", "width", "thickness", "top", "bottom", "upper", "lower", "left", "right", "front", "back", "vertical", "horizontal", "inside", "outside", "axial", "circumferential", etc. for indicating orientation or positional relationship are based on the orientation or positional relationship shown in the drawings, which is only for the convenience of describing the present application and simplifying the description, rather than indicating or implying that the referred location or original must have a specific orientation and operate with a specific structure; and therefore, cannot be understood as a limitation to the present application.

In addition, the terms "first" and "second" are only used for descriptive purposes and cannot be understood as indicating or implying relative importance or as implicitly indicating the quantity of indicated technical features. Therefore, the features defined with "first" and "second" may explicitly or implicitly include one or more such features. In the description of the present application, the meaning of "plurality" is at least two, such as two, three, etc., unless otherwise expressly and specifically limited.

**Claims**

1. An electrode piece, comprising a first current collector (10) and a first functional layer (20) arranged on at least one side of the first current collector (10), wherein the first functional layer (20) comprises active material particles, and a surface of the first functional layer (20) is provided with a plurality of first regions (30) and a plurality of second regions (40) distributed alternately with the first regions (30); an inorganic salt layer (50) is arranged outside part of the active material particles in the first regions (30).

2. The electrode piece according to claim 1, wherein a porosity of the first region (30) is smaller than a porosity of the second region (40).

3. The electrode piece according to claim 2, wherein the porosity of the first region (30) is 21% to 29%; and/or the porosity of the second region (40) is 30% to 34%.

4. The electrode piece according to claim 1, wherein the inorganic salt layer (50) comprises at least one of lithium fluoride, lithium carbonate and lithium silicate; and/or
a mass percentage of the inorganic salt layer (50) in the first region (30) is greater than a mass percentage of the inorganic salt layer (50) in the second region (40).

5. The electrode piece according to claim 3, wherein a width of the first region (30) is 100$\mu$m to 4mm; and/or a width of the second region (40) is 0$\mu$m to 4mm.

6. The electrode piece according to claim 3, wherein a content ratio of an oxygen element to a silicon element is greater than 4:1 in the first region (30).

7. The electrode piece according to any one of claims 1 to 6, wherein a content ratio of a fluorine element to a phosphorus element is greater than 7:1 in the first region (30).

8. The electrode piece according to any one of claims 1 to 6, wherein a content ratio S1:S2 of a silicon element to an oxygen element satisfies: $2:1 \leq S1:S2 \leq 4:1$ in the second region (40).

9. The electrode piece according to any one of claims 1 to 6, wherein a content ratio S3:S4 of a fluorine element to a phosphorus element of the first functional layer (20) satisfies: $6:1 \leq S3:S4 \leq 7:1$ in the second region (40).

10. The electrode piece according to any one of claims 1 to 6, wherein the active material particles comprise graphite and at least one of silicon material and silicon-oxygen material, and a mass of the silicon material and/or the silicon-oxygen material accounts for 7% to 50% of a total mass of the active material particles; or

the active material particles comprise carbon material and graphite; or
the active material particles comprise carbon material and at least one of silicon material and silicon-oxygen material, wherein a mass of the silicon material and/or the silicon-oxygen material accounts for 7% to 50% of a total mass of the active material particles.

11. The electrode piece according to claim 1, wherein a first included angle is formed between an extension direction of the first region (30) and a width direction of the first functional layer (20), and the first included angle ranges from 0° to 45°; and/or

   a ratio of a total area of the plurality of first regions (30) to a total area of the second regions (40) ranges from (0.7:1) to (3:1); and/or
   taking a surface of the first current collector (10) as a reference, a part of the first region (30) farthest from the first current collector (10) is higher than the second region (40), and a height difference between the part of the first region (30) farthest from the first current collector (10) and a part of the second region (40) farthest from the first current collector (10) is $0.1\mu m$ to $8\mu m$.

12. The electrode piece according to claim 11, wherein the electrode piece further comprises a first tab (91) and a first glue layer (81) formed on the surface of the first functional layer (20), the first functional layer (20) is provided with a first groove (21), and at least part of the first tab (91) is located in the first groove (21) and is covered by the first glue layer (81), and the first glue layer (81) covers at least one of the first regions (30).

13. The electrode piece according to claim 12, wherein the first groove (21) is provided with a first side, a second side and a third side, and a direction from the first side to the second side is parallel to a length direction of the first functional layer (20); wherein

   a part of the first glue layer (81) that is located on the surface of the first functional layer (20) on the first side of the first groove (21) covers 0 to 8 of the first regions (30); and/or
   a part of the first glue layer (81) that is located on the surface of the first functional layer (20) on the second side of the first groove (21) covers 0 to 8 of the first regions (30); and/or
   a part of the first glue layer (81) that is located on the surface of the first functional layer (20) on the third side of the first groove (21) covers 0 to 40 of the first regions (30); and/or
   the part of the first glue layer (81) that is located on the surface of the first functional layer (20) on the first side of the first groove (21) has a width of 1mm to 5mm in the length direction of the first functional layer (20); and/or
   the part of the first glue layer (81) that is located on the surface of the first functional layer (20) on the second side of the first groove (21) has a width of 1mm to 5mm in the length direction of the first functional layer (20).

14. A battery, comprising a sealed case and a battery cell located inside the sealed case, wherein the battery cell comprises a first electrode piece and a second electrode piece, and the first electrode piece is the electrode piece according to any one of claims 1 to 13, and a polarity of the second electrode piece is opposite to a polarity of the first electrode piece.

15. The battery according to claim 14, wherein one end of the second electrode piece covered by the first electrode piece is provided with a second glue layer (82), and the first region (30) of the first electrode piece corresponding to the second glue layer (82) is 0 to 20 in number; and/or

   the second electrode piece comprises a second current collector and a second functional layer (92) arranged on a surface of the second current collector, one end of the second electrode piece is provided with a second non-coated foil zone (93) that is free of the second functional layer (92), and the second glue layer (82) covers at least part of the second non-coated foil zone (93) and extends from the second non-coated foil zone (93) to the surface of the second functional layer (92); and/or
   the second glue layer (82) has a width of 3mm to 5mm in a length direction of the second electrode piece.

16. The battery according to claim 15, wherein the first functional layer (20) is provided with a first groove (21), and a surface of the second electrode piece is provided with a third glue layer corresponding to a location of the first groove (21); and/or

   the second electrode piece comprises a second current collector and a second functional layer (92) arranged on a surface of the second current collector and provided with a second groove (921), and a fourth glue layer (84) that covers the second groove (921); the second electrode piece is provided with a second tab, and the second tab is at least partially located in the second groove (921) and covered by the fourth glue layer (84).

17. The battery according to claim 16, wherein the first groove (21) has a first side, a second side and a third side, and a first projection of the third glue layer on the first electrode piece covers at least one of the first regions (30) and satisfies that:

a part of the first projection that is located on the first side of the first groove (21) covers 0 to 8 of the first regions (30); and/or

a part of the first projection that is located on the second side of the first groove (21) covers 0 to 8 of the first regions (30); and/or

a part of the first projection that is located on the third side of the first groove (21) covers 0 to 40 of the first regions (30); and/or

the second groove (921) has a fourth side, a fifth side and a sixth side, and a projection of the fourth glue layer (84) on the first electrode piece covers at least one of the first regions (30) and satisfies that: a projection of a part of the fourth glue layer (84) that is located on the fourth side of the second groove (921) on the first electrode piece covers 0 to 8 of the first regions (30); and/or

a projection of a part of the fourth glue layer (84) that is located on the fifth side of the second groove (921) on the first electrode piece covers 0 to 8 of the first regions (30); and/or

a projection of a part of the fourth glue layer (84) that is located on the sixth side of the second groove (921) on the first electrode piece covers 0 to 40 of the first regions (30).

FIG. 1

FIG. 2

FIG. 3

FIG. 4

FIG. 5

FIG. 6

## F1s

FIG. 7

## Si2p

FIG. 8

EP 4 462 495 A1

FIG. 9

FIG. 10

26

FIG. 11

FIG. 12

FIG. 13

FIG. 14

FIG. 15

| INTERNATIONAL SEARCH REPORT | International application No. |
| --- | --- |
| | **PCT/CN2023/084613** |

**A. CLASSIFICATION OF SUBJECT MATTER**

H01M4/13(2010.01)i; H01M4/62(2006.01)n; H01M10/0525(2010.01)n; H01M4/36(2006.01)n

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS, CNKI, CNTXT, VEN: 电池, 电极, 极片, 正极, 负极, 阳极, 阴极, 活性材料, 活性物质, 补锂, 盐, 保护, 层, 膨胀, 硅, 碳, 角, 斜, 胶, 槽, 极耳, 宽度, 投影, battery, electrode, positive, negative, anode, cathode, active, material, complement? Li, salt, protect+, layer, expan+, Si, C, slope, glue, groove, tab, width, project+

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114975855 A (ZHUHAI COSMX BATTERY CO., LTD.) 30 August 2022 (2022-08-30) description, paragraphs 0005-0149, and figures 1-4 | 1-17 |
| PX | CN 218385272 U (ZHUHAI COSMX BATTERY CO., LTD.) 24 January 2023 (2023-01-24) description, paragraphs 0005-0132, and figures 1-4 | 1-17 |
| X | CN 112397682 A (NINGDE CONTEMPORARY AMPEREX TECHNOLOGY CO., LTD.) 23 February 2021 (2021-02-23) description, paragraphs 0004-0071, and figures 1-4 | 1-11, 14 |
| Y | CN 112397682 A (NINGDE CONTEMPORARY AMPEREX TECHNOLOGY CO., LTD.) 23 February 2021 (2021-02-23) description, paragraphs 0004-0071, and figures 1-4 | 12-17 |
| X | CN 112331928 A (NINGDE CONTEMPORARY AMPEREX TECHNOLOGY CO., LTD.) 05 February 2021 (2021-02-05) description, paragraphs 0004-0075 | 1-11, 14 |

☑ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 June 2023** | **21 June 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/084613**

**INTERNATIONAL SEARCH REPORT**

### C. DOCUMENTS CONSIDERED TO BE RELEVANT

| Category* | Citation of document, with indication, where appropriate, of the relevant passages | Relevant to claim No. |
|---|---|---|
| Y | CN 112331928 A (NINGDE CONTEMPORARY AMPEREX TECHNOLOGY CO., LTD.) 05 February 2021 (2021-02-05) description, paragraphs 0004-0075 | 12-17 |
| Y | CN 212380454 U (BYD CO., LTD.) 19 January 2021 (2021-01-19) description, paragraphs 0003-0080, and figures 2-8 | 12-17 |
| Y | CN 114614109 A (ZHUHAI COSMX BATTERY CO., LTD.) 10 June 2022 (2022-06-10) description, paragraphs 0005-0109, and figures 1-8 | 12-17 |
| A | CN 203733894 U (NINGDE AMPEREX TECHNOLOGY LTD.) 23 July 2014 (2014-07-23) entire document | 1-17 |
| A | CN 215644565 U (ZHUHAI COSMX BATTERY CO., LTD.) 25 January 2022 (2022-01-25) entire document | 1-17 |

Form PCT/ISA/210 (second sheet) (July 2022)

**INTERNATIONAL SEARCH REPORT**
Information on patent family members

International application No.

**PCT/CN2023/084613**

| Patent document cited in search report | | | Publication date (day/month/year) | Patent family member(s) | | | Publication date (day/month/year) |
|---|---|---|---|---|---|---|---|
| CN | 114975855 | A | 30 August 2022 | None | | | |
| CN | 218385272 | U | 24 January 2023 | None | | | |
| CN | 112397682 | A | 23 February 2021 | WO | 2021027743 | A1 | 18 February 2021 |
| | | | | EP | 3989311 | A1 | 27 April 2022 |
| | | | | US | S2022158177 | A1 | 19 May 2022 |
| | | | | CN | 112397682 | B | 15 July 2022 |
| | | | | EP | 3989311 | A4 | 03 August 2022 |
| CN | 112331928 | A | 05 February 2021 | WO | 2021027782 | A1 | 18 February 2021 |
| CN | 212380454 | U | 19 January 2021 | None | | | |
| CN | 114614109 | A | 10 June 2022 | CN | 217062239 | U | 26 July 2022 |
| CN | 203733894 | U | 23 July 2014 | US | 2015207111 | A1 | 23 July 2015 |
| | | | | US | 10541441 | B2 | 21 January 2020 |
| | | | | US | 2018366775 | A1 | 20 December 2018 |
| | | | | US | 2022278360 | A1 | 01 September 2022 |
| | | | | US | 2021384548 | A1 | 09 December 2021 |
| CN | 215644565 | U | 25 January 2022 | None | | | |

Form PCT/ISA/210 (patent family annex) (July 2022)

**EP 4 462 495 A1**

**Patent documents cited in the description**

- CN 202210690099

- CN 202221520256